# EUROPEAN PATENT SPECIFICATION

(11) **EP 2 253 423 B1**
(45) Date of publication and mention of the grant of the patent: **05.09.2012**
(21) Application number: 10162071.4
(22) Date of filing: 06.05.2010
(51) Int. Cl.: B23Q 7/04

(54) **Workpiece changer of machine tool and machine tool**
Werkstückwechsler für Werkzeugmaschine sowie Werkzeugmaschine
Changeur de pièce de machine-outil et machine-outil

(30) Priority: 15.05.2009 JP 2009119220
(43) Date of publication of application: 24.11.2010
(73) Proprietor: Mori Seiki Co., Ltd., Yamatokoriyama-shi, Nara 639-1160 (JP)
(72) Inventor: Kameyama, Tomonori, Yamatokoriyama-shi Nara 639-1160 (JP); Okuyama, Yoshinobu, Yamatokoriyama-shi Nara 639-1160 (JP); Ogawa, Shinichiro, Yamatokoriyama-shi Nara 639-1160 (JP); Maejima, Shinichi, Yamatokoriyama-shi Nara 639-1160 (JP)
(74) Representative: Grünecker, Kinkeldey, Stockmair & Schwanhäusser

(56) References cited:
- EP-A1- 1 894 669
- WO-A1-2004/065061
- DE-A1-102004 059 054
- JP-A- 7 096 404

## Description

The present invention relates to a workpiece changer in which a machined workpiece gripped by a workpiece grip part of a machine tool is automatically changed with an unmachined workpiece, and to a machine tool comprising such a workpiece changer.

For example, a workpiece changer of a lathe is disclosed in JP 07-96404. This workpiece changer includes a loader arm supported on a gate-shaped guide rail provided above the lathe to be movable in a Z-axis direction (a left-right direction), a loader head supported on the loader arm to be movable in a Y-axis direction (a top-down direction), and two chucks arranged on the loader head and opened/closed by compressed air.

In the workpiece changer, when machining of a workpiece is finished, the loader arm standing by outside the machine moves to above a spindle chuck of the lathe, the loader head lowers therefrom into the machine, and a machined workpiece gripped by the spindle chuck is received by one of the chucks and an unmachined workpiece gripped by the other chuck is supplied to the spindle chuck.

Incidentally, there is a problem in the conventional workpiece changer. The problem is that due to movement in the Z-axis direction and the Y-axis direction between the outside and the inside of the machine to change workpieces, the movement amount of the loader head is large, and because of the necessity to wait for convergence of vibration of the loader head when it moves into the machine, it accordingly takes time for the workpiece changing.

Further, because of employment of a structure in which the chucks are opened/closed by the compressed air, it takes time for the opening/closing operation of the chucks, leading to the problem of an increased time required for the workpiece changing.
Moreover, document WO 2004/065061 discloses a machine tool according to the preamble of claim 1.

Accordingly, it is an objective of the present invention to provide an improved workpiece changer and machine tools having such a workpiece changer, wherein an efficiency of workpiece change is improved and a compact design of the workpiece changer is achieved.

This objective is solved by a workpiece changer with the features of patent claim 1.
This objective is further solved by a machine tool comprising such workpiece changer. Preferred embodiments are laid down in the dependent claims.
According to the present invention, a workpiece changer is changing a machined workpiece gripped by a workpiece grip part of a machine tool with an unmachined workpiece, the workpiece changer including: a first workpiece transfer device taking the machined workpiece out of the workpiece grip part by applying a pressing force in a direction of an axis of the workpiece grip part to the machined workpiece, and supplying the unmachined workpiece to the workpiece grip part; and a second workpiece transfer device supplying the unmachined workpiece to the first workpiece transfer device.

The substantial workpiece changing time can be reduced to the time during which the first workpiece transfer device only moves forward/backward in the axis direction between the standby position and the workpiece changing position, so that the time required for changing the workpieces can be reduced as compared to the conventional workpiece changer which is configured to move in the Z-axis and the Y-axis directions between the outside and the inside of the machine.

Further, since the first workpiece transfer device is configured to perform the workpiece changing by pressing the machined workpiece at the workpiece grip part or pressing the workpiece grip part by means of the unmachined workpiece, the workpiece changing can be performed surely and in a short time by a simple structure. In particular, the time required for opening/closing the chuck can be substantially reduced as compared to the conventional case where the chuck is opened/closed by means of compressed air.

The first workpiece transfer device includes a workpiece takeout mechanism taking the machined workpiece out of the workpiece grip part and a workpiece supply mechanism supplying the unmachined workpiece to the workpiece grip part, and is configured to move the workpiece takeout mechanism and the workpiece supply mechanism forward/backward in a direction of an axis of the workpiece grip part while any of the mechanisms is coaxial with the axis.
Further, the workpiece takeout mechanism includes first gripping claws gripping the machined workpiece, and presses the machined workpiece in the axis direction while the workpiece takeout mechanism is coaxial with the axis of the workpiece grip part to cause the first gripping claws to move to a grip position and grip the machined workpiece and then take the machined workpiece out of the workpiece grip part.
The workpiece supply mechanism includes second gripping claws gripping the unmachined workpiece, and presses the unmachined workpiece in the axis direction while the workpiece supply mechanism is coaxial with the axis of the workpiece grip part to cause the second gripping claws to move to an open position and release the unmachined workpiece and then supply the unmachined workpiece to the workpiece grip part.

Since the first workpiece transfer device is configured to include the workpiece takeout mechanism and the workpiece supply mechanism and to move the workpiece takeout mechanism and the workpiece supply mechanism forward/backward in the axis direction while any of the mechanisms is coaxial with the axis of the workpiece grip part to thereby perform the workpiece changing, the workpiece changing can be performed surely and in a short time by a simple structure.

The first gripping claws and the second gripping claws are supported to be movable in a direction perpendicular to the axis of the workpiece grip part between the open position and the grip position.
The workpiece takeout mechanism includes a first holding mechanism holding the first gripping claws at the open position or the grip position when a first drive mechanism moves the first gripping claws to the open position or the grip position.
The workpiece supply mechanism includes a second holding mechanism holding the second gripping claws at the open position or the grip position when a second drive mechanism moves the second gripping claws to the open position or the grip position.
The first drive mechanism presses the machined workpiece gripped by the workpiece grip part in the axis direction to cause the first gripping claws held at the open position by the first holding mechanism to move to the grip position, and the second drive mechanism presses the workpiece grip part by means of the unmachined workpiece gripped by the second gripping claws to cause the second gripping claws held at the grip position by the second holding mechanism to move to the open position.

Since the first drive mechanism moving the first gripping claws to the grip position by pressing the machined workpiece gripped by the workpiece grip part is provided, and the second drive mechanism moving the second gripping claws to the open position by pressing the workpiece grip part by means of the unmachined workpiece gripped by the second gripping claws is provided, the machined workpiece can be gripped by the first gripping claws and the unmachined workpiece can be supplied to the workpiece grip part.

Further, since the first holding mechanism holding the first gripping claws at the open position when the first gripping claws are moved to the open position is provided, and the second holding mechanism holding the second gripping claws at the open position when the second gripping claws are moved to the open position is provided, the first gripping claws and the second gripping claws can be held at the open positions without using a special drive source.

In a preferred embodiment, the first drive mechanism of the workpiece takeout mechanism moves the first gripping claws to the open position by moving a cam formed at a front end portion of a first drive shaft forward, and moves the first gripping claws to the grip position by moving the cam backward.
The first holding mechanism holds the first gripping claws at the open position by arresting backward movement of the first drive shaft from a forward-moved position.
The second drive mechanism of the workpiece supply mechanism moves the second gripping claws to the open position by moving a cam formed at a front end portion of a second drive shaft forward, and moves the second gripping claws to the grip position by moving the cam backward.
The second holding mechanism holds the second gripping claws at the open position by arresting backward movement of the second drive shaft from a forward-moved position.

Since the first and second gripping claws are opened/closed by moving the cams formed on the first and second drive shafts forward/backward, and the first and second gripping claws are held at the open positions by arresting backward movements of the first and second drive shafts, the first and second gripping claws can be held at the open positions only by moving the first and second drive shafts forward/backward without using a special drive source.

In another preferred embodiment, the workpiece takeout mechanism includes a first forward/backward drive member disposed to be movable forward/backward in the direction of the axis of the workpiece grip part, and a first member and a second member which are arranged at a front and a back of the first forward/backward drive member and to be movable in the axis direction relative to the first forward/backward drive member.
The first gripping claws are supported on a front end portion of the first member, the first drive shaft is disposed in axial cores of the first forward/backward drive member, the first member and the second member, the first holding mechanism is disposed in the first member, and a bias spring biasing the first drive shaft in a backward direction is disposed in the second member.
The workpiece supply mechanism includes a second forward/backward drive member disposed to be movable forward/backward in the direction of the axis of the workpiece grip part, and a third member and a fourth member which are arranged at a front and a back of the second forward/backward drive member and to be movable in the axis direction relative to the second forward/backward drive member.
The second gripping claws are supported on a front end portion of the third member, the second drive shaft is disposed in axial cores of the second forward/backward drive member, the third member and the fourth member, a bias spring biasing the second drive shaft in a backward direction is disposed in the third member, and the second holding mechanism is disposed in the fourth member.

Since the workpiece takeout mechanism in configured to include the first forward/backward drive member movable forward/backward in the axis direction, and the first member and the second member which are arranged to be movable relative to the first forward/backward drive member, and the first drive mechanism opening/closing the first gripping claws is disposed in the first member, and the bias spring biasing the first drive shaft in a backward direction is disposed in the second member, the workpiece takeout mechanism can be compactly configured.

Further, since the workpiece supply mechanism is configured to include the second forward/backward drive member, and the third member and the fourth member which are arranged to be movable relative to the second forward/backward drive member, the bias spring biasing the second drive shaft in a backward direction is disposed in the third member, and the second holding mechanism holding the second gripping claws in an open state is disposed in the fourth member, the workpiece supply mechanism can be compactly configured.
Hereinafter, the present invention is illustrated and explained by means of preferred embodiments thereof in conjunction with the accompanying drawings, wherein:
FIG. 1 is a front view of a machine tool including a workpiece changer according to a first embodiment of the present invention;
FIG. 2 is a plan view of the workpiece changer;
FIG. 3 is a front view of first and second workpiece transfer devices of the workpiece changer;
FIG. 4 is a sectional side view of the first workpiece transfer device;
FIG. 5 is a sectional side view showing a workpiece takeout mechanism of the first workpiece transfer device in an open state (at the time of pressing in a drive shaft);
FIG. 6 is a sectional side view of the workpiece takeout mechanism in a closed state of gripping a machined workpiece (at the time of pressing a workpiece grip part);
FIG. 7 is a sectional side view of the workpiece takeout mechanism in a state of moving backward while gripping the machined workpiece;
FIG. 8 is a sectional side view of a workpiece supply mechanism of the first workpiece transfer device in a state of gripping an unmachined workpiece;
FIG. 9 is a sectional side view of the workpiece supply mechanism in a state of releasing the unmachined workpiece (at the time of pressing the workpiece grip part);
FIG. 10 is a sectional side view of the workpiece supply mechanism in a state of releasing the unmachined workpiece and moving backward; and
FIG. 11 is a sectional side view of the workpiece supply mechanism in a state in which gripping claws thereof are closed (at the time of pressing in a pressing part).

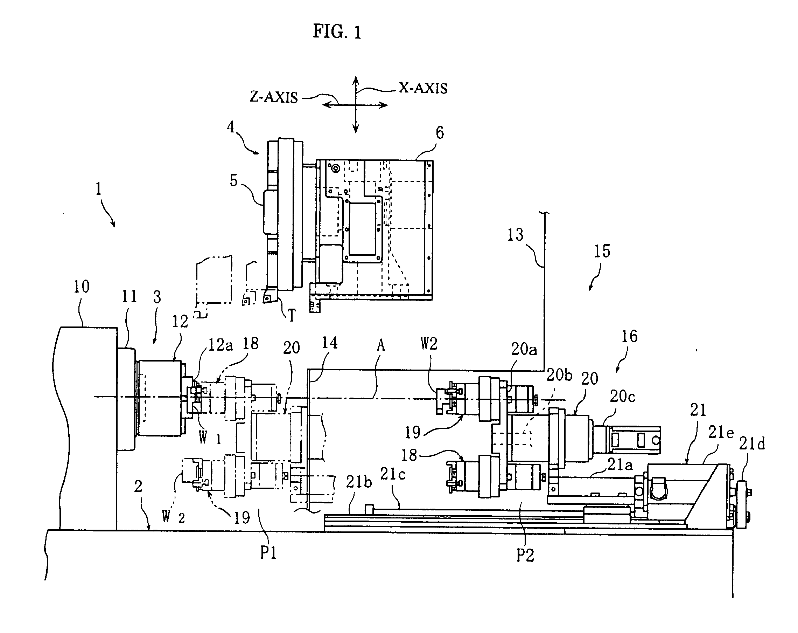

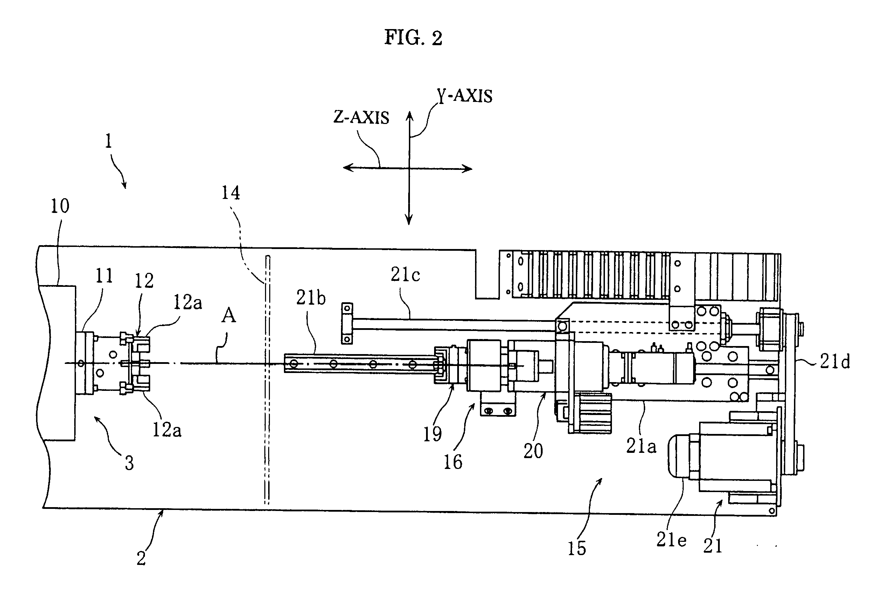

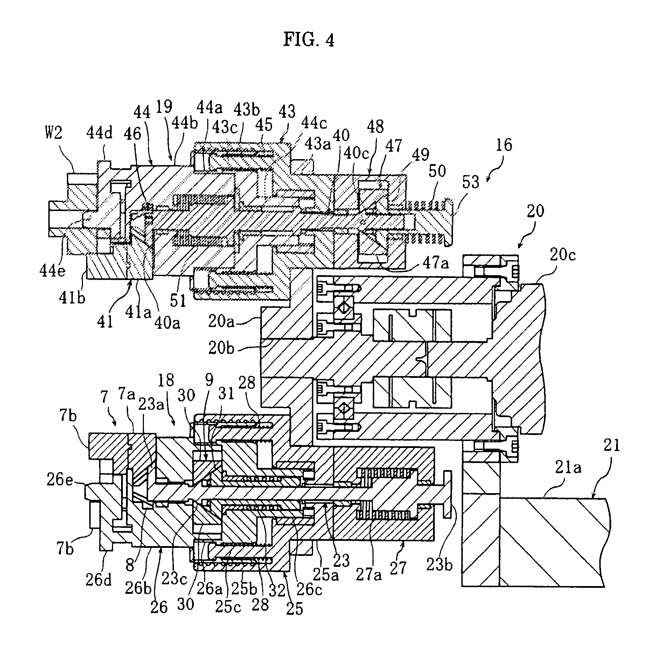

FIG. 1 to FIG. 11 are views explaining a workpiece transfer device of a machine tool according to an embodiment of the present invention. Note that though the workpiece transfer device according to this embodiment is composed of many components, some of the components that substantially integrally operate are illustrated as one body in FIG. 4 for easy understanding.

In the drawings, numeral 1 denotes a lathe (machine tool) which includes a slant-type bed 2, a headstock 3 arranged on the front side and on the left end portion of the bed 2, and a tool post 4 arranged on the back side of the central portion of the bed 2, as viewed from the front of the machine.

The tool post 4 has a turret 5 to which a plurality of tools T are attached and an indexing mechanism 6 indexing and positioning the turret 5 so that a desired tool T is located at a machining position.

The tool post 4 is driven by not-shown Z-axis feed mechanism and Y-axis feed mechanism in a Z-axis direction parallel to an axis A of the headstock 3 and in a Y-axis direction perpendicular to the Z-axis direction respectively.

The headstock 3 has a spindle head 10 fixed to the bed 2, a spindle 11 rotatably supported on the spindle head 10, and a chuck (a workpiece grip part) 12 mounted on the spindle 11 to grip a workpiece. The chuck 12 has three sets of claw parts 12a radially arranged with respect to the axis A, and grips or releases the workpiece by moving the claw parts 12a in a radial direction.

The lathe 1 includes a workpiece changer 15 changing a machined workpiece W1 gripped by the chuck 12 with an unmachined workpiece W2. The workpiece changer 15 is surrounded by a cover member 13 when it is located at a standby position, and a shutter 14 is openably/closably disposed at a portion of the cover member 13 facing the headstock 3. This shutter 14 forms a boundary between a machining region P1 and a standby position P2.

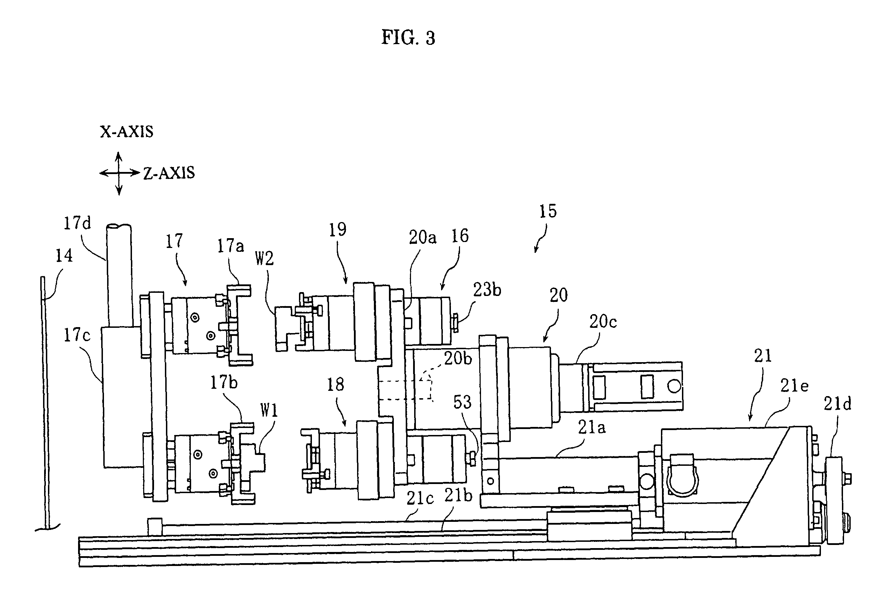

The workpiece changer 15 includes a first workpiece transfer device 16 taking the machined workpiece W1 out of the chuck 12 and supplying the unmachined workpiece W2 to the chuck 12, and a second workpiece transfer device 17 supplying the unmachined workpiece W2 to the first workpiece transfer device 16 and taking the machined workpiece W1 out of the first workpiece transfer device 16 (see FIG. 3).

The second workpiece transfer device 17 has a loader chuck 17a receiving the machined workpiece W1 from the first workpiece transfer device 16, a loader chuck 17b supplying the unmachined workpiece W2 to the first workpiece transfer device 16, a loader head 17c supporting the loader chucks 17a and 17b, and a loader arm 17d moving the loader head 17c in the Z-axis and an X-axis directions. The second workpiece transfer device 17 transfers the machined workpiece W1 out to a not-shown workpiece stocker placed outside the machine and transfers the unmachined workpiece W2 into the machine from the workpiece stocker.

The first workpiece transfer device 16 includes a workpiece takeout mechanism 18 taking the machined workpiece W1 out of the chuck 12, a workpiece supply mechanism 19 supplying the unmachined workpiece W2 to the chuck 12, a turning and positioning mechanism 20 tuning and positioning the workpiece takeout mechanism 18 and the workpiece supply mechanism 19 so that one of them is located at a position coaxial with the axis A of the chuck 12, and a forward/backward drive mechanism 21 driving them forward/backward in the axis A direction.

The turning and positioning mechanism 20 has a turn arm 20a supporting and turning the workpiece takeout mechanism 18 and the workpiece supply mechanism 19, a turn shaft 20b to which the turn arm 20a is fixed, and a turn motor 20c rotationally driving the turn shaft 20b.

The forward/backward drive mechanism 21 has a base member 21a to which the turning and positioning mechanism 20 is attached, a guide rail 21b fixed on the bed 2 to movably support the base member 21a in the Z-axis direction, a ball screw 21c moving the base member 21a in the Z-axis direction, and a drive motor 21e rotationally driving the ball screw 21c. Note that 21d denotes a driving belt transmitting the rotation of the drive motor 21e to the ball screw 21c.

The workpiece takeout mechanism 18 has a first forward/backward drive member 25 supported by the turn arm 20a and driven forward/backward in the direction of the axis A of the chuck 12 by the forward/backward drive mechanism 21, and a first member 26 and a second member 27 which are arranged at the front and the back of the first forward/backward drive member 25 to be relatively movable in the direction of the axis A and to be coaxial with the first forward/backward drive member 25.

The first forward/backward drive member 25 has a base part 25a fixed to the turn arm 20a and a cylinder part 25b in a cylindrical shape formed at the front of the base part 25a. The first member 26 has a holding part 26a housing a later-described first holding mechanism 9, a drive part 26b formed at a front portion of the holding part 26a to house a later-described first drive mechanism 8, and a guide part 26c formed at a rear end portion of the holding part 26a.

The guide part 26c of the first member 26 is slidably supported by the base part 25a of the first forward/backward drive member 25. The holding part 26a of the first member 26 is inserted in the cylinder part 25b of the first forward/backward drive member 25, and guide pins 25c implanted in the first forward/backward drive member 25 are inserted in the holding part 26a. The first forward/backward drive member 25 and the first member 26 are biased in directions away from each other by bias springs 28 disposed in the guide pins 25c.

The drive part 26b of the first member 26 has an abutting plate 26d abutting the machined workpiece W1 formed on a front end portion, and a projection 26e to be inserted into an axial core hole of the machined workpiece W1 formed at an axial core portion.

At a front end portion of the drive part 26b, three sets of first gripping claws 7 are arranged. The first gripping claw 7 has a slider 7a and a claw main body 7b fixed to the slider 7a. The three sets of first gripping claws 7 are radially arranged with respect to the axis A of the chuck 12, and supported to be movable in a direction perpendicular to the axis A between an open position and a grip position.

Further, the first drive mechanism 8 moving the three sets of first gripping claws 7 to the open position or the grip position is built in the drive part 26b, and the first holding mechanism 9 holding the first gripping claws 7 at the open position when the first gripping claws 7 are moved to the open position is built in the holding part 26a.

The first drive mechanism 8 is configured to move a first drive shaft 23 disposed in the axial cores of the first forward/backward drive member 25, the first member 26 and the second member 27 forward, whereby a first drive cam 23a formed at a front end portion of the first drive shaft 23 moves the sliders 7a and thus the claw main bodies 7b to the open position in a manner to push and open them outward in the radial direction, and to move the first drive shaft 23 backward, whereby the first drive cam 23a moves the sliders 7a and thus the claw main bodies 7b to the grip position in a manner to draw them inward in the radial direction.

The first holding mechanism 9 has a first locking member 30 disposed in the holding part 26a to be movable in the direction perpendicular to the axis thereof, a first locking cam 23c formed on the first drive shaft 23 so that its rear end face 23c' is locked on a front end face 30' of the first locking member 30 to hold the first gripping claws 7 at the open position, a first piston 31 moving the first locking member 30 in the direction perpendicular to the axis, and a bias spring 32 biasing the first piston 31 in a direction to close the first locking member 30. The first locking cam 23c has a conical cam face on its outer surface and comes into slide contact with a cam face formed on an inner surface of the first locking member 30 to push and open the first locking member 30 outward in the radial direction as it moves forward.

The second member 27 is supported to be slidable in the axis direction by the first drive shaft 23, and a first pressing part 23b formed at the rear end of the first drive shaft 23 projects to the back of the second member 27. The second member 27 has a built-in first bias spring 27a biasing the first drive shaft 23 in a backward direction, that is, a direction to close the first gripping claws 7.

The operation of the workpiece takeout mechanism 18 will be described.

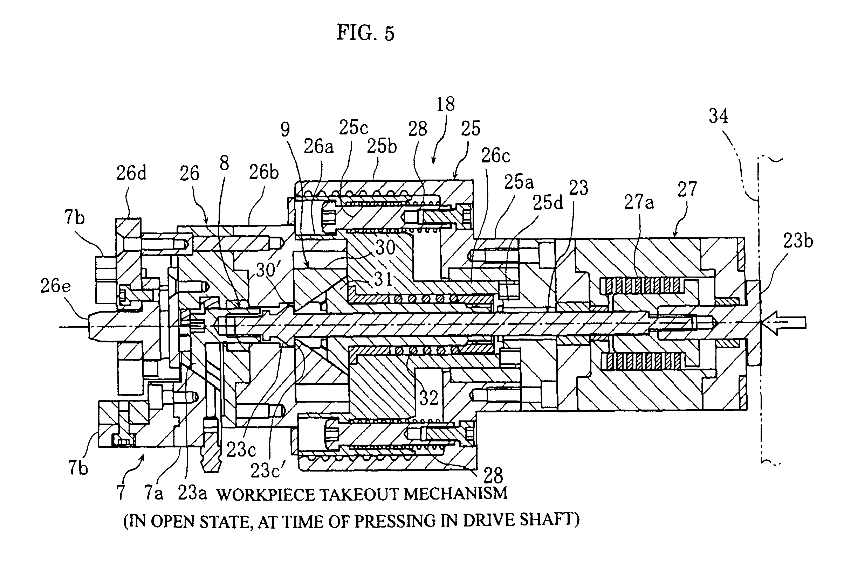

When pushing in the first pressing part 23b forward (to the left in the drawings), the second member 27 abuts the first forward/backward drive member 25, the first drive shaft 23 moves forward while compressing the first bias spring 27a, the first locking cam 23c pushes and opens the first locking member 30 outward in the radial direction, and the first drive cam 23a moves forward to move the sliders 7a outward in the radial direction. This moves the first gripping claws 7 to the open position, the first locking cam 23c moves to the front of the first locking member 30, and the first piston 31 moves backward by a biasing force of the spring 32 to move the first locking member 30 inward in the radial direction. Thus, the rear end face 23c' of the first locking member 23c is locked on the front end face 30' of the first locking member 30 to hold the first gripping claws 7 at the open position (see FIG. 5).

The push-in operation of the first pressing part 23b may be implemented by either a method of directly pushing in the first pressing part 23b forward by a cylinder or the like which is separately provided, or a method of relatively moving the first pressing part 23b forward by moving the workpiece takeout mechanism 18 backward by the forward/backward drive mechanism 21 to press it against a fixing part 34 (see a two-dotted chain line in FIG. 5).

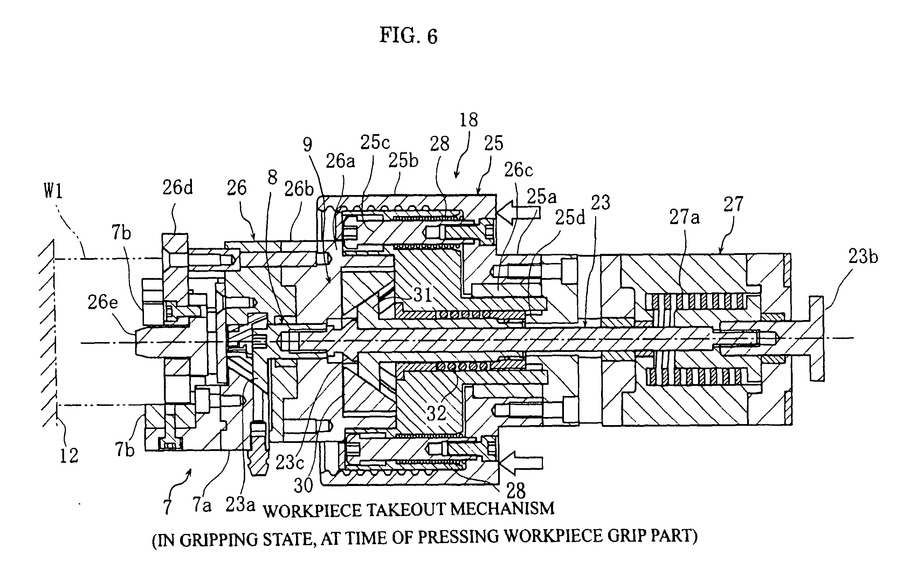

With the first gripping claws 7 being held at the open position, the turning and positioning mechanism 20 aligns the workpiece takeout mechanism 18 with the axis A, and the forward/backward drive mechanism 21 moves the workpiece takeout mechanism 18 together with the workpiece supply mechanism 19 forward to cause the abutting plate 26d to press the machined workpiece W1. Then, the forward movement of the first member 26 is arrested, and the first forward/backward drive member 25 moves forward and its projection 25d moves the first piston 31 forward. This causes the first piston 31 to move the first locking member 30 outward to unlock locking between the first locking cam 23c and the first locking member 30. As a result, the first drive shaft 23 moves backward by the biasing force of the first bias spring 27a, the first drive cam 23a moves the sliders 7a in a closing direction, and the first gripping claws 7 move to the grip position and grip the machined workpiece W1 (see FIG. 6). Note that, in this state, the first locking member 30 remains outside in the radial direction because the first piston 31 is located forward.

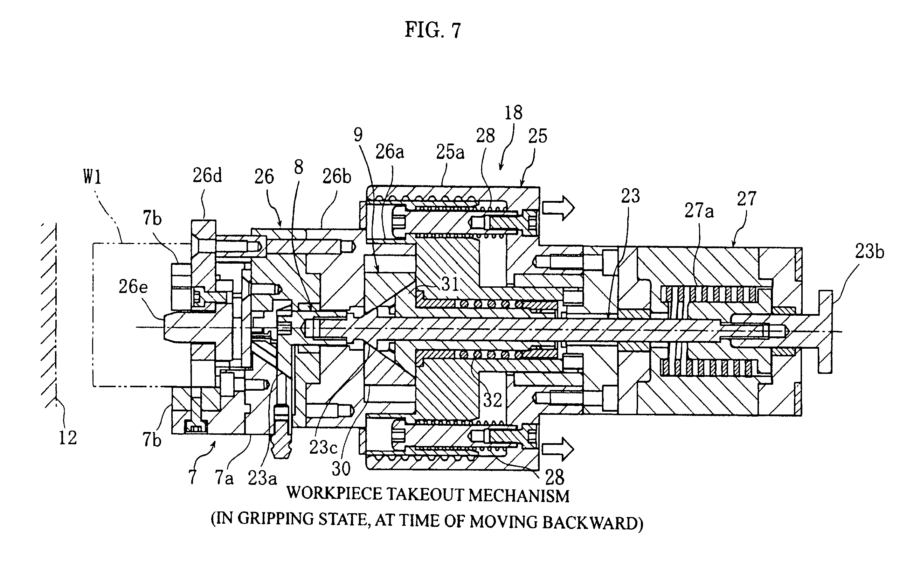

Subsequently, when the forward/backward drive mechanism 21 moves the workpiece takeout mechanism 18 backward, the first piston 31 moves backward by the spring 32 to move the first locking member 30 inward, and the second member 27 abuts the first forward/backward drive member 25. The machined workpiece W1 is maintained to be held by the first gripping claws 7 (see FIG. 7).

Note that as shown in FIG. 5, by pushing in the first pressing part 23b forward, moving the first drive cam 23a of the first drive shaft 23 forward, and moving the sliders 7a outward, the first gripping claws 7 open to deliver the machined workpiece W1 to the second workpiece transfer device 17.

The workpiece supply mechanism 19 has a second forward/backward drive member 43 fixed to the turn arm 20a and driven to be movable forward/backward in the direction of the axis A of the chuck 12, and a third member 44 and a fourth member 48 which are arranged at the front and the back of the second forward/backward drive member 43 to be relatively movable in the direction of the axis A and to be coaxial with the second forward/backward drive member 43.

The second forward/backward drive member 43 has a base part 43a fixed to the turn arm 20a and a cylinder part 43b in a cylindrical shape formed at the front of the base part 43a. The third member 44 has a holding part 44a having a second bias spring 51 built therein, a drive part 44b formed at a front portion of the holding part 44a to house a later-described second drive mechanism 46, and a guide part 44c formed at a rear portion of the holding part 44a.

The guide part 44c of the third member 44 is slidably supported by the base part 43a of the second forward/backward drive member 43. The holding part 44a of the third member 44 is inserted in the cylinder part 43b of the second forward/backward drive member 43, and guide pins 43c implanted in the second forward/backward drive member 43 are inserted in the holding part 44a. The second forward/backward drive member 43 and the third member 44 are biased in directions away from each other by bias springs 45 disposed in the guide pins 43c.

The drive part 44b of the third member 44 has an abutting plate 44d on which the unmachined workpiece W2 abuts formed on a front end portion, and a projection 44e to be inserted into an axial core hole of the unmachined workpiece W2 formed at an axial core portion.

At a front end portion of the drive part 44b, three sets of second gripping claws 41 are arranged. The second gripping claw 41 has a slider 41a and a claw main body 41b fixed to the slider 41a. The three sets of second gripping claws 41 are radially arranged with respect to the axis A of the chuck 12, and supported to be movable in a direction perpendicular to the axis A between an open position and a grip position.

Further, the second drive mechanism 46 moving the three sets of second gripping claws 41 to the open position or the grip position is built in the drive part 44b. The second drive mechanism 46 is configured to move a second drive shaft 40 disposed in the axial cores of the second forward/backward drive member 43, the third member 44 and the fourth member 48 forward, whereby a second drive cam 40a formed at a front end portion of the second drive shaft 40 moves the sliders 41a and thus the claw main bodies 41b to the open position by pushing and opening them outward in the radial direction, and to move the second drive cam 40a backward, whereby the second drive cam 40a moves the sliders 41a and thus the claw main bodies 41b to the grip position by drawing them inward in the radial direction.

In the holding part 44a, the second bias spring 51 biasing the second drive shaft 40 in a backward direction is disposed so that the biasing force of the second bias spring 51 biases the second gripping claws 41 into a gripping state.

The fourth member 48 is supported to be slidable in the axis direction by the second drive shaft 40, and a second holding mechanism 47 holding the second gripping claws 41 at the open position when the second gripping claws 41 are moved to the open position is built in the fourth member 48. The second holding mechanism 47 has a second locking member 47a disposed in the fourth member 48 to be movable in the direction perpendicular to the axis thereof, a second locking cam 40c formed on the second drive shaft 40 so that its rear end face 40c' is locked on a front end face 47' of the second locking member 47a to hold the second gripping claws 41 at the open position, a second piston 49 moving the second locking member 47a in the direction perpendicular to the axis, and a spring 50 biasing the second piston 49 in a direction to close the second locking member 47a.

A second pressing part 53 formed at the rear end of the second piston 49 projects to the back of the fourth member 48, and the spring 50 is interposed between the second pressing part 53 and the rear end face of the fourth member 48.

The operation of the workpiece supply mechanism 19 will be described.

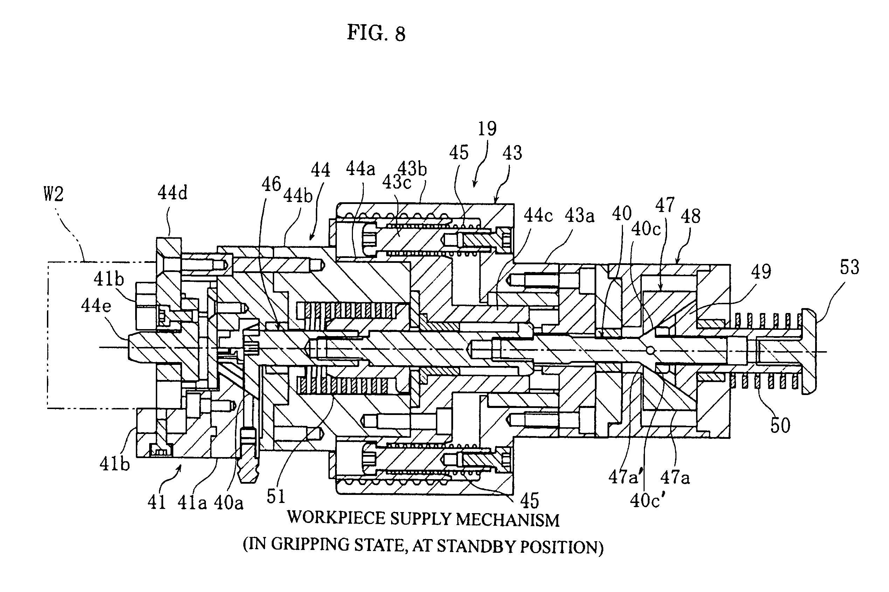

When the workpiece supply mechanism 19 is located at the standby position, the third member 44 is separated forward from the second forward/backward drive member 43, and the fourth member 48 abuts the forward/backward drive member 43. Then, the second drive shaft 40 is biased backward by the second bias spring 51 and the second drive cam 40a moves the sliders 41a inward, whereby the second gripping claws 41 grip the unmachined workpiece W2 (see FIG. 8). Note that the second locking cam 40c is kept retracted in the second locking member 47a.

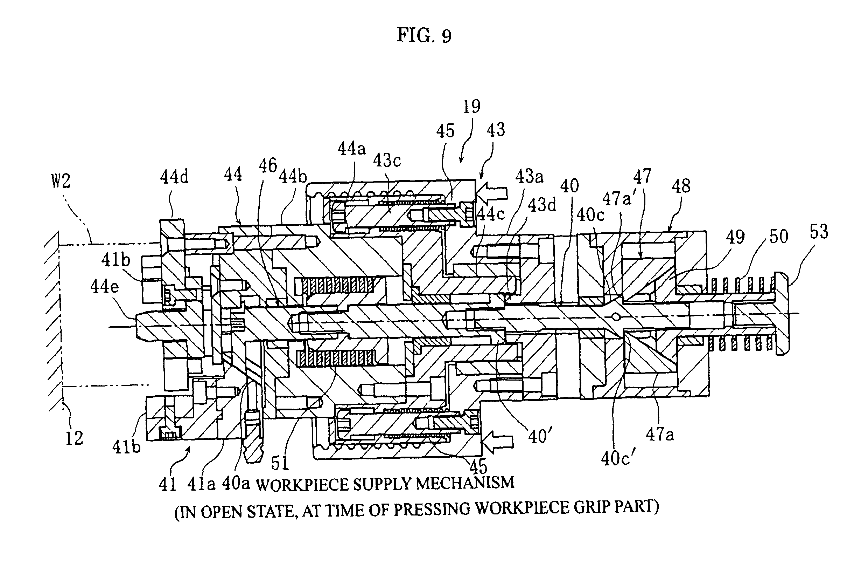

When moving the workpiece supply mechanism 19 forward while keeping coaxial with the axis A, the unmachined workpiece W2 abuts the chuck 12. When further moving the workpiece supply mechanism 19 forward, a projection 43d of the second forward/backward drive member 43 abuts a flange part 40' of the second drive shaft 40 to move the second drive shaft 40 forward against the biasing force of the second bias spring 51, and the second drive cam 40a moves the slider 41a outward to move the second gripping claws 41 to the open position. Thus, the unmachined workpiece W2 is released and supplied to the chuck 12. The forward movement of the second drive shaft 40 causes the second locking cam 40c to move forward while pushing and opening the second locking member 47a, and when the second locking cam 40c is located forward of the second locking member, the second piston 49 moves backward by the bias spring 50 to move the second locking member 47a to a closed position. Thus, the rear end face 40c' of the second locking cam 40c is locked on a front end face 47a' of the second locking member 47, resulting in that the second gripping claws 41 are held at the open position (see FIG. 9).

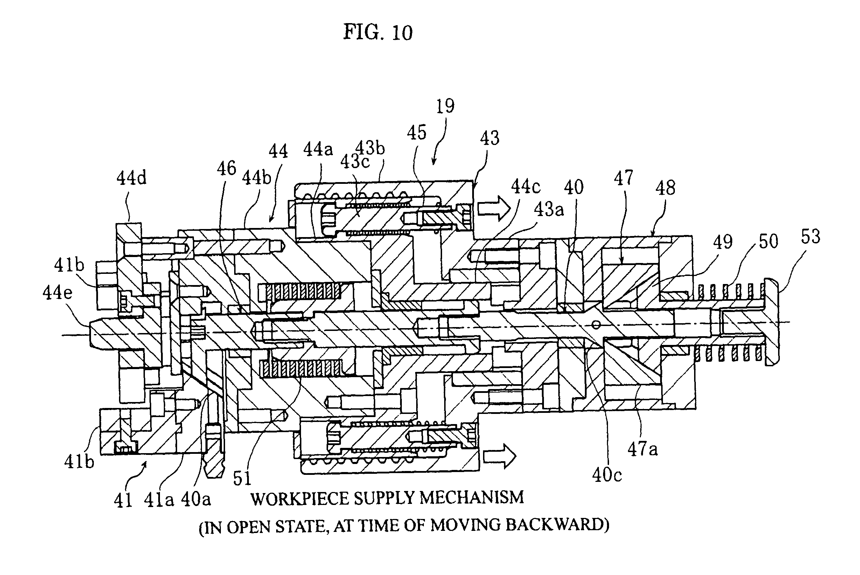

When moving the workpiece supply mechanism 19 backward, the third member 44 relatively moves forward with respect to the second forward/backward drive member 43 by the biasing force of the spring member 45, and the fourth member 48 abuts the second forward/backward drive member 43. In this case, the second gripping claws 41 are held at the open position (see FIG. 10).

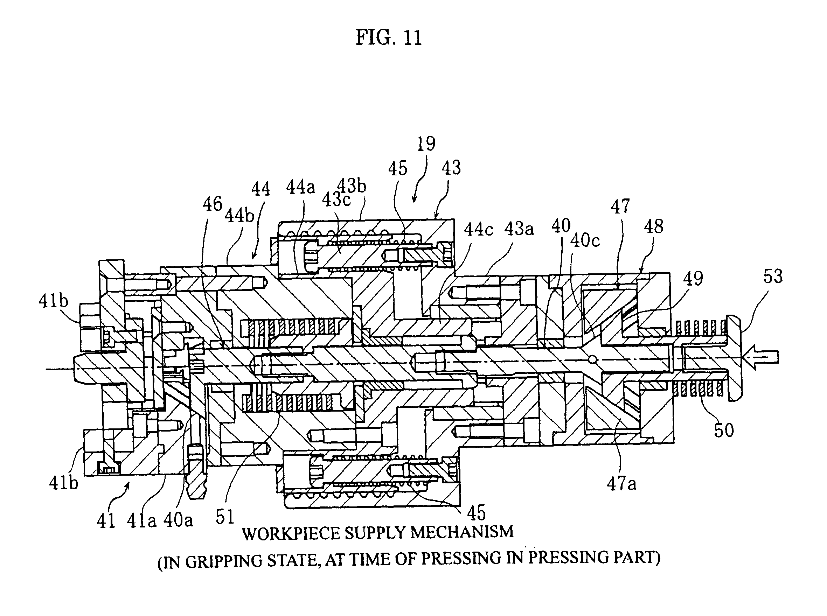

When pushing in the second pressing part 53 forward, the second piston 49 moves forward and pushes and opens the second locking member 47a to unlock locking between the second locking cam 40c and the second locking member 47a, and the second drive shaft 40 moves backward by the second bias spring 51. Thus, the second drive cam 40a moves the second gripping claws 41 to the grip position, and the second gripping claws 41 grip the unmachined workpiece W2 (see FIG. 11).

The operation of changing the machined workpiece W1 with the unmachined workpiece W2 will be described.

While the lathe 1 is machining a workpiece, a machined workpiece W1 is delivered from the workpiece takeout mechanism 18 of the first workpiece transfer device 16 to the second workpiece transfer device 17, and an unmachined workpiece W2 is supplied from the second workpiece transfer device 17 to the workpiece supply mechanism 19 (see FIG. 3), and the first workpiece transfer device 16 stands by at the standby position P2 in this state (see a solid line in FIG. 1).

When the machining of the workpiece gripped by the chuck 12 of the lathe 1 is finished, the shutter 14 is opened, and the first workpiece transfer device 16 moves forward in the direction of the axis A while the workpiece takeout mechanism 18 is positioned to be coaxial with the axis A. Then, the abutting plate 26d of the workpiece takeout mechanism 18 presses the machined workpiece W1, whereby the first gripping claws 7 are closed to grip the machined workpiece W1 (see a two-dotted chain line in FIG 1), and the first workpiece transfer device 16 slightly moves backward, whereby the machined workpiece W1 is taken out of the chuck 12.

Subsequently, the workpiece supply mechanism 19 turns to be coaxial with the axis A and moves forward, and the unmachined workpiece W2 presses the chuck 12 to cause the second gripping claws 41 to open, whereby the unmachined workpiece W2 is supplied to the chuck 12.

When the first workpiece transfer device 16 moves backward in the direction of the axis A to the standby position P2, the shutter 14 is closed, and then machining of the unmachined workpiece W2 is started. During the machining, the first pressing part 23b of the workpiece takeout mechanism 18 of the first workpiece transfer device 16 is pushed in again, whereby the first gripping claws 7 move to the open position to deliver the machined workpiece W1 to the second workpiece transfer device 17 and the first gripping claws 7 are held at the open position. Further, the second pressing part 53 of the workpiece supply mechanism 19 is pushed in, whereby the second gripping claws 41 move to the grip position to grip the unmachined workpiece W2 from the second workpiece transfer device 17, and the second gripping claws 41 are held in a closed state.

This embodiment includes the first workpiece transfer device 16 taking the machined workpiece W1 out of the chuck 12 mounted on the spindle 11 and supplying the unmachined workpiece W2 to the chuck 12, and the second workpiece transfer device 17 taking the machined workpiece W1 out of first workpiece transfer device 16 and supplying the unmachined workpiece W2 to the first workpiece transfer device 16. Therefore, the substantial workpiece changing time can be reduced to the time during which the first workpiece transfer device 16 only moves forward/backward in the direction of the axis A between the standby position P2 and the workpiece changing position P1, so that the time required for changing the workpieces can be reduced as compared to the conventional workpiece changer which is configured to move in the Z-axis and the Y-axis directions between the outside and the inside of the machine.

In this embodiment, since the workpiece takeout mechanism 18 has the three sets of first gripping claws 7 and the first drive mechanism 8 opening/closing the first gripping claws 7, and the first drive mechanism 8 is configured to move the first gripping claws 7 to the grip position by pressing the machined workpiece W1 gripped by the chuck 12 by means of the abutting plate 26d, it is possible to grip and take out the machined workpiece W1 surely and in a short time by the simple structure.

In this embodiment, since the workpiece supply mechanism 19 has the plurality of second gripping claws 41 and the second drive mechanism 46 opening/closing the second gripping claws 41, and the second drive mechanism 46 is configured to move the second gripping claws 41 to the open position by pressing the chuck 12 by means of the unmachined workpiece W2 gripped by the second gripping claws 41, it is possible to release the unmachined workpiece W2 and supply it to the spindle 11 surely and in a short time by the simple structure.

In this embodiment, since the first holding mechanism 9 holding the first gripping claws 7 at the open position by arresting the backward movement of the first drive shaft 23 is provided, and the second holding mechanism 47 holding the second gripping claws 41 at the open position by arresting the backward movement of the second drive shaft 40, it is possible to hold the first gripping claws 7 and the second gripping claws 41 at the open positions without using a special drive source.

In this embodiment, owing to the structure that the backward movement of the first drive shaft 23 is arrested by locking the first locking cam 23a formed on the first drive shaft 23 on the openably/closably disposed first locking member 30 and the backward movement of the second drive shaft 40 is arrested by locking the second locking cam 40c formed on the second drive shaft 40 on the openably/closably disposed second locking member 47a, the structures of the first holding mechanism 9 and the second holding mechanism 47 are simple and the first gripping claws 7 and the second gripping claws 41 can be surely held at the open positions.

In this embodiment, since the workpiece takeout mechanism 18 has the first forward/backward drive member 25, and the first member 26 and the second member 27 which are arranged to be movable in the direction of the axis A relative to the first forward/backward drive member 25, the first gripping claws 7 are arranged at the front end portion of the first member 26, the first drive mechanism 8 is disposed in the drive part 26b, the first holding mechanism 9 is disposed in the holding part 26a, and the first bias spring 27a is disposed in the second member 27, it is possible to compactly configure the workpiece takeout mechanism 18.

In this embodiment, since the workpiece supply mechanism 19 has the second forward/backward drive member 43, and the third member 44 and the fourth member 48 which are arranged to be movable in the direction of the axis A relative to the second forward/backward drive member 43, the second gripping claws 41 are arranged at the front end portion of the third member 44, the second drive mechanism 46 is disposed in the drive part 44b, the second bias spring 51 is disposed in the holding part 44a, and the second holding mechanism 47 is disposed in the fourth member 48, it is possible to compactly configure the workpiece supply mechanism 19.

Note that the case where the first and second holding mechanisms hold the first and second gripping claws at the open positions has been described in the above embodiment, but the first and second holding mechanisms may be configured to hold the first and second gripping claws at the grip positions in the present invention.
The present embodiments are therefore to be considered in all respects as illustrative and no restrictive, the scope of the invention being indicated by the appended claims rather than by the foregoing description, and all changes which come within the meaning and range of equivalency of the claims are therefore intended to be embraced therein.

## Claims

1. A workpiece changer (15) changing a machined workpiece (W1) gripped by a workpiece grip part (12) of a machine tool (1) with an unmachined workpiece (W2), said workpiece changer (15) comprising:
a first workpiece transfer device (16) for taking the machined workpiece (W1) out of said workpiece grip part (12), and supplying the unmachined workpiece (W2) to said workpiece grip part (12); and
a second workpiece transfer device (17) for supplying the unmachined workpiece (W2) to said first workpiece transfer device (16),
wherein said first workpiece transfer device (16) comprises a workpiece takeout mechanism (18) for taking the machined workpiece (W1) out of said workpiece grip part (12) and a workpiece supply mechanism (19) for supplying the unmachined workpiece (W2) to said workpiece grip part (12), and is configured to move said workpiece takeout mechanism (18) and said workpiece supply mechanism (19) forward/backward in a direction of an axis (A) of said workpiece grip part (12) while any of said mechanisms is coaxial with the axis, and
wherein said workpiece takeout mechanism (18) comprises first gripping claws (7) gripping the machined workpiece (W1), and
wherein said workpiece supply mechanism (19) comprises second gripping claws (41) for gripping the unmachined workpiece (W2),
**characterized in that**
the workpiece takeout mechanism (18) is adapted to press the machined workpiece (W1) in the axis direction while said workpiece takeout mechanism (18) is coaxial with the axis of said workpiece grip part (12) to cause said first gripping claws (7) to move to a grip position and grip the machined workpiece (W1) and then take the machined workpiece (W1) out of said workpiece grip part (12), and
the workpiece supply mechanism (19) is adapted to press the unmachined workpiece (W2) in the axis direction while said workpiece supply mechanism (19) is coaxial with the axis of said workpiece grip part (12) to cause said second gripping claws (41) to move to an open position and release the unmachined workpiece (W2) and then supply the unmachined workpiece (W2) to said workpiece grip part (12), and that said first gripping claws (7) and said second gripping claws (41) are supported to be movable in a direction perpendicular to the axis (A) of said workpiece grip part (12) between the open position and the grip position,
wherein said workpiece takeout mechanism (18) comprises a first holding mechanism (9) for holding said first gripping claws (7) at the open position or the grip position when a first drive mechanism (8) moves said first gripping claws (7) to the open position or the grip position,
wherein said workpiece supply mechanism (19) comprises a second holding mechanism (47) holding said second gripping claws (41) at the open position or the grip position when a second drive mechanism (46) moves said second gripping claws (41) to the open position or the grip position,
wherein said first drive mechanism (8) presses the machined workpiece (W1) gripped by said workpiece grip part (12) in the axis direction to cause said first gripping claws (7) held at the open position by said first holding mechanism (9) to move to the grip position, and
wherein said second drive mechanism (46) presses said workpiece grip part (12) by means of the unmachined workpiece (W2) gripped by said second gripping claws (41) to cause said second gripping claws (41) held at the grip position by said second holding mechanism (47) to move to the open position.

2. The workpiece changer (15) of a machine tool according to claim 1, **characterized in that** said first drive mechanism (8) of said workpiece takeout mechanism (18) is configured to move said first gripping claws (7) to the open position by moving a first drive cam (23a) formed at a front end portion of a first drive shaft (23) forward, and move said first gripping claws (7) to the grip position by moving said first drive cam (23a) backward,
wherein said first holding mechanism (9) holds said first gripping claws (7) at the open position by arresting backward movement of said first drive shaft (23) from a forward-moved position,
wherein said second drive mechanism (46) of said workpiece supply mechanism (19) is configured to move said second gripping claws (41) to the open position by moving a second drive cam (40a) formed at a front end portion of a second drive shaft (40) forward, and move said second gripping claws (41) to the grip position by moving said second drive cam (40a) backward, and
wherein said second holding mechanism (47) holds said second gripping claws (41) at the open position by arresting backward movement of said second drive shaft (40) from a forward-moved position.

3. The workpiece changer (15) of a machine tool according to claims 1 or 2, **characterized in that** said workpiece takeout mechanism (18) comprises a first forward/backward drive member (25) disposed to be movable forward/backward in the direction of the axis (A) of said workpiece grip part (12), and a first member (26) and a second member (27) which are arranged at a front and a back of said first forward/backward drive member (25) and to be movable in the axis direction relative to said first forward/backward drive member (25).

4. The workpiece changer (15) of a machine tool according to one of the preceding claims 1 to 3, **characterized in that** said workpiece supply mechanism (19) comprises a second forward/backward drive member (43) disposed to be movable forward/backward in the direction of the axis of said workpiece grip part (12), and a third member (44) and a fourth member (48) which are arranged at a front and a back of said second forward/backward drive member (43) and to be movable in the axis direction relative to said second forward/backward drive member (43).

5. The workpiece changer (15) of a machine tool according to claims 3 or 4, **characterized in that** said first gripping claws (7) are supported on a front end portion of said first member (26),
wherein said first drive shaft (23) is disposed in axial cores of said first forward/backward drive member (25), said first member (26) and said second member (27),
wherein said first holding mechanism (9) is disposed in said first member (26), and a first bias spring (27a) biasing said first drive shaft (23) in a backward direction is disposed in said second member (27).

6. The workpiece changer (15) of a machine tool according to one of the preceding claims 3 to 5, **characterized in that** said second gripping claws (41) are supported on a front end portion of said third member (44),
wherein said second drive shaft (40) is disposed in axial cores of said second forward/backward drive member (43), said third member (44) and said fourth member (48), and
wherein a second bias spring (51) biasing said second drive shaft (40) in a backward direction is disposed in said third member (44), and said second holding mechanism (47) is disposed in said fourth member (48).

7. Machine tool comprising a workpiece changer according to one of the preceding claims 1 to 6.

## Patentansprüche

1. Werkstückwechsler (15), der ein spanend bearbeitetes Werkstück (W1), gegriffen durch ein Werkstückgreifteil (12) einer Werkzeugmaschine (1) gegen ein unbearbeitetes Werkstück (W2) wechselt, wobei der Werkstückwechsler (15) aufweist:
eine erste Werkstückübergabevorrichtung (16) zum Entnehmen des spanend bearbeiteten Werkstückes (W1) aus dem Werkstückgreifteil (12) heraus und Zuführen des unbearbeiteten Werkstückes (W2) zu dem Werkstückgreifteil (12); und
eine zweite Werkstückübergabevorrichtung (17) zum Zuführen des unbearbeiteten Werkstückes (W2) zu der ersten Werkstückübergabevorrichtung (16),
wobei die erste Werkstückübergabevorrichtung (16) aufweist eine Werkstückentnahmevorrichtung (18) zum Entnehmen des spanend bearbeiteten Werkstückes (W1) aus dem Werkstückgreifteil (12) und eine Werkstückzuführungsvorrichtung (19) zum Zuführen des unbearbeiteten Werkstückes (W2) zu dem Werkstückgreifteil (12), und konfiguriert ist, die Werkstückentnahmevorrichtung (18) in eine nach vorn- nach hinten- Richtung einer Achse (A) des Werkstückgreifteils (12) zu bewegen, während jede der Vorrichtungen mit der Achse koaxial ist, und
wobei die Werkstückentnahmevorrichtung (18) erste Greifklauen (7) aufweist, die das spanend bearbeitete Werkstück (W1) greifen, und
wobei die Werkstückzuführungsvorrichtung (19) zweite Greifklauen (41) zum Greifen des unbearbeiteten Werkstückes (W2) aufweist,
**dadurch gekennzeichnet, dass**
die Werkstückentnahmevorrichtung (18) vorgesehen ist, das spanend bearbeitete Werkstück (W1) in der Achsrichtung zu drücken, während die Werkstückentnahmevorrichtung (18) mit der Achse des Werkstückgreifteils (12) koaxial ist, um die ersten Greifklauen (7) zu veranlassen, sich in eine Greifposition zu bewegen und
das spanend bearbeitete Werkstück (W1) zu ergreifen und dann das spanend bearbeitete Werkstück (W1) aus dem Werkstückgreifteil (12) zu entnehmen, und
die Werkstückzuführungsvorrichtung (19) vorgesehen ist, das unbearbeitete Werkstück (W2) in der Achsrichtung zu drücken, während die Werkstückzuführungsvorrichtung (19) koaxial mit der Achse des Werkstückgreifteils (12) ist, um die zweiten Greifklauen (41) zu veranlassen, sich in eine offene Position zu bewegen und das unbearbeitete Werkstück (W2) freizugeben und dann das unbearbeitete Werkstück (W2) zu dem Werkstückgreifteil (12) zuzuführen, und dass die ersten Greifklauen (7) und die zweiten Greifklauen (41) gelagert sind, um in eine Richtung rechtwinklig zu der Achse (A) des Werkstückgreifteils (12) zwischen der offenen Position und der Greifposition bewegbar zu sein,
wobei die Werkstückentnahmevorrichtung (18) eine erste Haltevorrichtung (9) zum Halten der ersten Greifklauen (7) in der offenen Position oder der Greifposition aufweist, wenn eine erste Antriebsvorrichtung die ersten Greifklauen (7) in die offene Position oder die Greifposition bewegt,
wobei die Werkstückzuführungsvorrichtung (19) eine zweite Haltevorrichtung (47) aufweist, die die zweiten Greifklauen (41) in der offenen Position oder der Greifposition hält, wenn eine zweite Antriebsvorrichtung (46) die zweiten Greifklauen (41) in die offene Position oder die Greifposition bewegt,
wobei die erste Antriebsvorrichtung (8) das spanend bearbeitete Werkstück (W1), das durch das Werkstückgreifteil (12) gegriffen ist, in der Achsrichtung drückt, um die ersten Greifklauen (7), die in der offenen Position durch die erste Haltevorrichtung (9) gehalten werden, zu veranlassen, sich in die Greifposition zu bewegen, und
wobei die zweite Antriebsvorrichtung (46) das Werkstückgreifteil (12) mittels des unbearbeiteten Werkstückes (W2), gegriffen durch die zweiten Greifklauen (41), drückt, um die zweiten Greifklauen (41), gehalten in der Greifposition durch die zweite Haltevorrichtung, zu veranlassen, sich in die offene Position zu bewegen.

2. Werkstückwechsler (15) einer Werkzeugmaschine nach Anspruch 1, **dadurch gekennzeichnet, dass** die erste Antriebsvorrichtung (8) der Werkstückentnahmevorrichtung (18) konfiguriert ist, die ersten Greifklauen (7) in die offene Position zu bewegen, durch Bewegen eines ersten Greifnockens (23a), gebildet an einem vorderen Endabschnitt einer ersten Antriebswelle (23) nach vorn, und die ersten Greifklauen (7) in die Greifposition durch Bewegen des ersten Antriebsnockens (23a) nach hinten,
wobei die erste Haltevorrichtung (9) die ersten Greifklauen (7) in der offenen Position hält durch eine arretierende Rückwärtsbewegung der ersten Antriebswelle (23) aus einer nach vorn bewegten Position,
wobei die zweite Antriebsvorrichtung (46) der Werkstückzuführungsvorrichtung (19) konfiguriert ist, die zweiten Greifklauen (41) in die offene Position zu bewegen, durch Bewegen eines zweiten Antriebsnockens (40a), gebildet an einem vorderen Endabschnitt einer zweiten Antriebswelle (40) nach vorn, und die zweiten Greifklauen (41) in die Greifposition zu bewegen, durch Bewegen des zweiten Antriebsnockens (40) nach hinten, und
wobei die zweite Haltevorrichtung (47) die zweiten Greifklauen (41) in der offenen Position durch eine arretierende Rückwärtsbewegung der zweiten Antriebswelle (40) aus der nach vorn- bewegten Position hält.

3. Werkstückwechsler (15) einer Werkzeugmaschine nach Anspruch 1 oder 2, **dadurch gekennzeichnet, dass** die Werkstückentnahmevorrichtung (18) aufweist ein erstes nach vorn / nach hinten- Antriebsteil (25), vorgesehen um nach vorn / nach hinten in der Richtung der Achse (A) des Werkstückgreifteils (12) bewegbar zu sein, und ein erstes Teil (26) und ein zweites Teil (27), angeordnet an einer Vorderseite und einer Rückseite des ersten nach vorn / nach hinten- Antriebsteils (25), und um in der Achsrichtung in Bezug zu dem ersten nach vorn / nach hinten-Antriebsteil (25) bewegbar zu sein.

4. Werkstückwechsler (15) einer Werkzeugmaschine nach einem der vorhergehenden Ansprüche 1 bis 3, **dadurch gekennzeichnet, dass** die Werkstückzuführungsvorrichtung (19) aufweist ein zweites nach vorn / nach hinten- Antriebsteil (43), vorgesehen, um bewegbar nach vorn / nach hinten in der Richtung der Achse des Werkstückgreifteils (12) zu sein, und ein drittes Teil (44) und ein viertes Teil (48), die an einer Vorder- und einer Rückseite des zweiten nach vorn / nach hinten- Antriebsteils (43) angeordnet sind, um in der Achsrichtung in Bezug zu dem zweiten nach vorn / nach hinten- Antriebsteil (43) bewegbar zu sein.

5. Werkstückwechsler (15) einer Werkzeugmaschine nach Anspruch 3 oder 4, **dadurch gekennzeichnet, dass** die ersten Greifklauen (7) an einem vorderen Endabschnitt des ersten Teiles (26) gelagert sind,
wobei die erste Antriebswelle (23) in axialen Kernen des ersten nach vorn / nach hinten- Antriebsteil (25), des ersten Teils (26) und des zweiten Teils (27) angeordnet ist,
wobei die erste Haltevorrichtung (9) in dem ersten Teil (26) angeordnet ist und eine erste Vorspannfeder (27a), die die erste Antriebswelle (23) in einer Richtung nach hinten vorspannt, in dem zweiten Teil (27) angeordnet ist.

6. Werkstückwechsler (15) einer Werkzeugmaschine nach einem der vorhergehenden Ansprüche 3 bis 5, **dadurch gekennzeichnet, dass** die zweiten Greifklauen (41) an einem vorderen Endabschnitt des dritten Teils (44) gelagert sind,
wobei die zweite Antriebswelle (40) in axialen Kernen des zweiten nach vorn / nach hinten- Antriebsteil (43), des dritten Teils (44) und des vierten Teils (48) angeordnet ist, und
wobei eine zweite Vorspannfeder (51), die die zweite Antriebswelle (40) in eine Richtung nach hinten vorspannt, in dem dritten Teil (44) angeordnet ist, und die zweite Haltevorrichtung (47) in dem vierten Teil (48) angeordnet ist.

7. Werkzeugmaschine, aufweisend einen Werkstückwechsler nach einem der vorhergehenden Ansprüche 1 bis 6.

## Revendications

1. Changeur (15) de pièces à travailler substituant une pièce usinée (W1) saisie par un organe de préhension de pièce (12) de machine-outil (1) par une pièce non usinée (W2), ledit changeur (15) de pièces à travailler comprenant :
un premier dispositif de transfert de pièce (16) destiné à extraire la pièce usinée (W1) dudit organe de préhension de pièce (12) et à délivrer la pièce non usinée (W2) au dit organe de préhension de pièce (12), et
un second dispositif de transfert de pièce (17) destiné à délivrer la pièce non usinée (W2) au dit premier dispositif de transfert de pièce (16),
dans lequel ledit premier dispositif de transfert de pièce (16) comprend un mécanisme d'extraction de pièce (18) destiné à extraire la pièce usinée (W1) dudit organe de préhension de pièce (12) et un mécanisme de délivrance de pièce (19) destiné à délivrer la pièce non usinée (W2) au dit organe de préhension de pièce (12), et il est configuré pour déplacer ledit mécanisme d'extraction de pièce (18) et ledit mécanisme de délivrance de pièce (19) en avant ou en arrière dans la direction d'un axe (A) dudit organe de préhension de pièce (12) alors qu'aucun desdits mécanismes n'est coaxial avec l'axe, et
dans lequel ledit mécanisme d'extraction de pièce (18) comprend des premières mâchoires de préhension (7) saisissant la pièce usinée (W1), et
dans lequel ledit mécanisme de délivrance de pièce (19) comprend des secondes mâchoires de préhension (41) destinées à saisir la pièce non usinée (W2),
**caractérisé en ce que**
le mécanisme d'extraction de pièce (18) est conçu pour presser la pièce usinée (W1) dans la direction de l'axe alors que ledit mécanisme d'extraction de pièce (18) est coaxial avec l'axe dudit organe de préhension de pièce (12) afin d'amener lesdites premières mâchoires de préhension (7) à se déplacer vers une position de préhension et de saisir la pièce usinée (W1) puis d'extraire la pièce usinée (W1) dudit organe de préhension de pièce (12), et
le mécanisme de délivrance de pièce (19) est conçu pour presser la pièce non usinée (W2) dans la direction de l'axe alors que ledit mécanisme de délivrance de pièce (19) est coaxial avec l'axe dudit organe de préhension de pièce (12) afin d'amener lesdites secondes mâchoires de préhension (41) à se déplacer vers une position ouverte et à libérer la pièce non usinée (W2) puis à délivrer la pièce non usinée (W2) au dit organe de préhension de pièce (12), et **en ce que**
lesdites premières mâchoires de préhension (7) et lesdites secondes mâchoires de préhension (41) sont supportées pour être mobile dans une direction perpendiculaire à l'axe (A) dudit organe de préhension de pièce (12) entre la position ouverte et la position de préhension,
dans lequel ledit mécanisme d'extraction de pièce (18) comprend un premier mécanisme de maintien (9) destiné à maintenir lesdites premières mâchoires de préhension (7) en position ouverte ou en position de préhension lorsqu'un premier mécanisme d'entraînement (8) déplace lesdites premières mâchoires de préhension (7) vers la position ouverte ou la position de préhension,
dans lequel ledit mécanisme de délivrance de pièce (19) comprend un second mécanisme de maintien (47) destiné à maintenir lesdites secondes mâchoires de préhension (41) en position ouverte ou en position de préhension lorsqu'un second mécanisme d'entraînement (46) déplace lesdites secondes mâchoires de préhension (41) vers la position ouverte ou la position de préhension,
dans lequel ledit premier mécanisme d'entraînement (8) presse la pièce usinée (W1 saisie par ledit organe de préhension de pièce (12) dans la direction axiale afin de d'amener lesdites premières mâchoires de préhension (7) maintenues en position ouverte grâce au dit premier mécanisme de maintien (9) à se déplacer vers la position de préhension, et
dans lequel ledit second mécanisme d'entraînement (46) presse ledit organe de préhension de pièce (12) au moyen de la pièce non usinée (W2) saisie par lesdites secondes mâchoires de préhension (41) afin d'amener lesdites secondes mâchoires de préhension (41) maintenues en position de préhension par ledit second mécanisme de maintien (47) à se déplacer vers la position ouverte.

2. Changeur (15) de pièces à travailler d'une machine-outil selon la revendication 1, **caractérisé en ce que** ledit premier mécanisme d'entraînement (8) dudit mécanisme d'extraction de pièce (18) est configuré pour déplacer lesdites premières mâchoires de préhension (7) vers la position ouverte en déplaçant vers l'avant une première came d'entraînement (23a) formée au niveau de la partie à l'extrémité avant d'un premier arbre d'entraînement (23), et pour déplacer lesdites premières mâchoires de préhension (7) vers la position de préhension en déplaçant vers l'arrière ladite première came d'entraînement (23a),
dans lequel ledit premier mécanisme de maintien (9) conserve lesdites premières mâchoires de préhension (7) en position ouverte en stoppant le mouvement vers l'arrière dudit premier arbre d'entraînement (23) depuis une position décalée vers l'avant,
dans lequel ledit second mécanisme d'entraînement (46) dudit mécanisme de délivrance de pièce (19) est configuré pour déplacer lesdites secondes mâchoires de préhension (41) vers la position ouverte en déplaçant vers l'avant une seconde came d'entraînement (40a) formée au niveau de la partie à l'extrémité avant d'un second arbre d'entraînement (40), et pour déplacer lesdites secondes mâchoires de préhension (41) vers la position de préhension en déplaçant vers l'arrière ladite seconde came d'entraînement (40a), et
dans lequel ledit second mécanisme de maintien (47) conserve lesdites secondes mâchoires de préhension (41) en position ouverte en stoppant le mouvement vers l'arrière dudit second arbre d'entraînement (40) depuis une position décalée vers l'arrière.

3. Changeur (15) de pièces à travailler d'une machine-outil selon les revendications 1 ou 2, **caractérisé en ce que** ledit mécanisme d'extraction de pièce (18) comprend un premier élément d'entraînement vers l'avant ou vers l'arrière (25) disposé pour pouvoir se déplacer vers l'avant ou vers l'arrière dans la direction de l'axe (A) dudit organe de préhension de pièce (12), ainsi qu'un premier élément (26) et un deuxième élément (27) qui sont agencés à l'avant et à l'arrière dudit premier élément d'entraînement vers l'avant ou vers l'arrière (25) et pour pouvoir se déplacer dans la direction de l'axe par rapport au dit premier élément d'entraînement vers l_{'}avant ou vers l'arrière (25).

4. Changeur (15) de pièces à travailler d'une machine-outil selon l'une des revendications 1 à 3 précédentes, **caractérisé en ce que** ledit mécanisme de délivrance de pièce (19) comprend un second élément d'entraînement vers l'avant ou vers l'arrière (43) disposé pour pouvoir se déplacer vers l'avant ou vers l'arrière dans la direction de l'axe dudit organe de préhension de pièce (12), ainsi qu'un troisième élément (44) et un quatrième élément (48) qui sont agencés à l'avant et à l'arrière dudit second élément d'entraînement vers l'avant ou vers l'arrière (43) et pour pouvoir se déplacer dans la direction de l'axe par rapport au dit second élément d'entraînement vers l'avant ou vers l'arrière (43).

5. Changeur (15) de pièces à travailler d'une machine-outil selon les revendications 3 ou 4, **caractérisé en ce que** lesdites premières mâchoires de préhension (7) sont supportées sur une partie à l'extrémité avant dudit premier élément (26),
dans lequel ledit premier arbre d'entraînement (23) est disposé dans des noyaux axiaux dudit premiers élément d'entraînement vers l'avant ou vers l'arrière (25), dudit premier élément (26) et dudit deuxième élément (27),
dans lequel ledit premier mécanisme de maintien (9) est disposé dans ledit premier élément (26) et un premier ressort de sollicitation (27a) contraignant ledit premier arbre d'entraînement (23) dans la direction vers l'arrière est disposé dans ledit deuxième élément (27).

6. Changeur (15) de pièces à travailler d'une machine-outil selon l'une des revendications 3 à 5 précédentes, **caractérisé en ce que** lesdites secondes mâchoires de préhension (41) sont supportées sur une partie à l'extrémité avant dudit troisième élément (44),
dans lequel ledit second arbre d'entraînement (40) est disposé dans des noyaux axiaux dudit second élément d'entraînement vers l'avant ou vers l'arrière (43), dudit troisième élément (44) et dudit quatrième élément (48), et dans lequel un second ressort de sollicitation (51) contraignant ledit second arbre d'entraînement (40) dans la direction vers l'arrière est disposé dans ledit troisième élément (44), et ledit second mécanisme de maintien (47) est disposé dans ledit quatrième élément (48).

7. Machine-outil comprenant un changeur de pièce à travailler conforme à l'une des revendications 1 à 6 précédentes.
